# EUROPÄISCHE PATENTANMELDUNG

(11) **EP 4 657 843 A1**
(43) Veröffentlichungstag der Anmeldung: **03.12.2025**
(21) Anmeldenummer: 24178728.2
(22) Anmeldetag: 29.05.2024
(51) Int. Cl.: H04N 5/262, G06V 10/25, G06V 20/52, H04N 23/61, H04N 23/60, H04N 23/69, H04N 23/695, H04N 25/443

(54) **KAMERAVORRICHTUNG UND VERFAHREN ZUM ÜBERWACHEN UND/ODER STEUERN EINES ARBEITSABLAUFS IN EINER ARBEITSUMGEBUNG**

(71) Anmelder: SICK AG, 79183 Waldkirch (DE)
(72) Erfinder: KEMPERMANN, Govinda, 79261 Gutach im Breisgau (DE); GERBER, Jan, 79350 Sexau (DE); BAAK, Josef, 79183 Waldkirch (DE)
(74) Vertreter: Manitz Finsterwald Patent- und Rechtsanwaltspartnerschaft mbB

(57) **Zusammenfassung**

Die Erfindung betrifft eine Kameravorrichtung und ein Verfahren zum Überwachen und/oder Steuern eines Arbeitsablaufs in einer Arbeitsumgebung. Die Kameravorrichtung umfasst zumindest einen Bildsensor, in welchem eine Vielzahl von Bildelementen angeordnet ist und welcher dazu ausgebildet ist, eine Abfolge von Bilddaten zumindest eines Bereichs der Arbeitsumgebung aufzunehmen, wobei die Aufnahme der Bilddaten während des Arbeitsablaufs kontinuierlich mit einer voreinstellbaren oder voreingestellten Bildrate erfolgt, die Kameravorrichtung weiterhin zumindest eine Erfassungseinheit umfasst, die dazu ausgebildet ist, in den Bilddaten ein oder mehrere Objekte zu erfassen, und zumindest eine Steuereinheit umfasst, die dazu ausgebildet ist, Bildaufnahmeparameter des zumindest einen Bildsensors zu steuern, wobei die Erfassungseinheit dazu ausgebildet ist, auf Basis der in den Bilddaten erfassten Objekte einen interessierenden Bereich zu bestimmen, wobei die Steuereinheit dazu ausgebildet ist, zumindest einen Bildaufnahmeparameter auf der Basis des von der Erfassungseinheit bestimmten interessierenden Bereichs zu steuern, insbesondere adaptiv zu verändern, und wobei der zumindest eine Bildaufnahmeparameter einen Cropping-Parameter umfasst, welcher die Aufnahme von Bilddaten durch den Bildsensor auf einen Bildausschnitt beschränkt, der dem interessierenden Bereich entspricht.

## Beschreibung

Die Erfindung betrifft eine Kameravorrichtung und ein Verfahren zum Überwachen und/oder Steuern eines Arbeitsablaufs in einer Arbeitsumgebung.

Bei stationären Anwendungen und Arbeitsabläufen, bei denen sich die Gegebenheiten mit der Zeit kontinuierlich verändern, beispielsweise bei der Palettierung und Depalettierung von Waren oder Paketen, werden häufig stationär montierte 2D und/oder 3D Sensor Systeme verwendet, um die Waren oder Pakete auf Bändern und Paletten zu erkennen, zu segmentieren, gegebenenfalls zu klassifizieren und die beste Greif-Koordinate für einen Roboterarm zu bestimmen. Bei den Sensoren handelt es sich beispielsweise um 3D Lichtlaufzeit-Kameras ("Time of Flight", ToF) oder 3D Stereo-Kameras, deren Tiefeninformation durch Daten von 2D RGB-Kameras unterstützt wird. Die 2D und/oder 3D Kameras werden üblicherweise über der Palette, beispielsweise in einer Höhe von 4m über dem Palettenboden, stationär angeordnet und liefern eine Abfolge von Bilddaten, um Waren und Pakete auf der Palette zu erkennen und beispielsweise einem Roboter die Greif-Koordinaten für einen Greifvorgang zu übermitteln.

Bei einem Arbeitsvorgang wie der Palettierung oder Depalettierung ändert sich je nach Höhe der Waren oder Pakete auf der Palette der relevante Bildausschnitt, im Allgemeinen auch als "region of interest" (ROI) oder als "interessierender Bereich" bekannt. Außerdem kann sich mit der Stapelhöhe, aber auch durch zeitlich veränderliche Einflüsse wie beispielsweise ein sich änderndes Umgebungslicht oder eine sich ändernde Art der Waren auf der Palette, die Qualität der 2D und 3D Daten ändern. So ist bei großen Entfernungen zwischen dem Sensor und dem aufgenommenen Objekt die Genauigkeit der 3D Daten geringer als bei niedrigen, und bei hellen Umgebungen das 2D Bild schärfer und heller als bei dunkler.

Hierbei ändert sich bei einem derartigen Arbeitsvorgang neben dem relevanten Bildausschnitt auch die in dem jeweiligen Bildausschnitt zur Verfügung stehende Auflösung. Viele Algorithmen zur Segmentierung und Klassifizierung und insbesondere neuronale Netze arbeiten jedoch am besten auf Eingabe-Bildern mit feststehender und bekannter Auflösung.

Für einen unterbrechungsfreien Arbeitsablauf werden Aufnahmeparameter der Sensoren oder Kameras wie beispielsweise räumliche und zeitliche Filter oder die Belichtungszeit häufig zu Beginn statisch für eine Arbeitsumgebung konfiguriert, so dass sie bei allen möglichen Gegebenheiten wie eine sich verändernde Umgebungshelligkeit oder sich verändernde Entfernungen der aufzunehmenden Objekte bestmöglich arbeiten können. So werden die Sensoren üblicherweise derart konfiguriert, dass sie immer einen gleichen, vom Benutzer zu Beginn des Arbeitsvorgangs festgelegten Bildausschnitt aufnehmen.

Dieser statische Bildausschnitt ist in der Regel so groß gewählt, dass während des Arbeitsvorgangs immer die gesamte Palette aufgenommen und abgebildet wird. Ein derart großer Bildausschnitt ist jedoch nicht immer notwendig, beispielsweise wenn während des Arbeitsablaufs die maximale Stapelhöhe erreicht ist. Somit werden teilweise überflüssige Daten generiert, die alle über eine Schnittstelle des Sensors ausgegeben und an eine zentralen Recheneinheit zur Datenverarbeitung übertragen werden müssen.

Insbesondere bei hochauflösenden Sensoren wie bei 3D Sensoren mit mehr als beispielsweise 0,2 MP oder bei 2D Sensoren mit mehr als 5 bis 10MP wird dazu eine große Übertragungsarchitektur mit hoher Bandbreite benötigt. Am Zielort werden die übertragenen Bilddaten für die Bearbeitung, d.h. beispielsweise für die Segmentierung oder die Klassifizierung, danach häufig durch Zuschneiden ("cropping") und räumliches Mitteln ("binning") auf eine feste Zielgröße komprimiert, da Algorithmen und insbesondere neuronale Netze am besten mit einer festgelegten, eher kleineren Auflösung der Bilddaten arbeiten.

Bei bisherigen stationären Anwendungen und Arbeitsabläufen ist eine hohe Bandbreite der Datenübertragung somit sowohl notwendig und als auch ausgelastet. Die Übertagung und Verarbeitung des großen Datenvolumens hat zum einen den Nachteil einer zusätzlichen Latenz, kann zum anderen jedoch auch zu Bandbreite bedingten Einschränkungen der Sensoren führen. So kann beispielsweise eine Beschränkung der Bandbreite eine Beschränkung der Auflösung der übertragenen Bilddaten erfordern. Zudem können die notwendige Übertragungsarchitektur, beispielsweise eine 1 0GBit Ethernet Architektur, und die weitere Verarbeitung auf einer zentralen Recheneinheit nicht unerhebliche Kosten verursachen.

Zusammengefasst lässt sich somit feststellen, dass durch die statische Konfiguration der Sensoren mit festgelegten Bildaufnahmeparametern und Filtereinstellungen nicht die bestmöglichen Daten aufgezeichnet werden, sondern ein Kompromiss, der vielen möglichen Gegebenheiten Rechnung tragen muss und damit nicht optimale Einstellungen liefert. So können beispielsweise bei großen Entfernungen die 3D Daten zu verrauscht sein, während sie bei kleinen Abständen zu sehr räumlich gemittelt sind.

Es ist daher eine Aufgabe der Erfindung, eine verbesserte Kameravorrichtung zum Überwachen und/oder Steuern eines Arbeitsablaufs in einer Arbeitsumgebung anzugeben, welche die Qualität und Quantität erzeugter Bilddaten optimiert. Es ist eine weitere Aufgabe der Erfindung, ein verbessertes Verfahren zum Überwachen und/oder Steuern eines Arbeitsablaufs in einer Arbeitsumgebung durch eine Kameravorrichtung anzugeben, welche eine schnellere, genauere und kostengünstigere Überwachung und/oder Steuerung des Arbeitsablaufs ermöglicht.

Die Aufgabe wird durch in einem ersten Aspekt der Erfindung durch eine Kameravorrichtung mit den Merkmalen des Anspruchs 1 gelöst und insbesondere dadurch, dass die Kameravorrichtung zumindest einen Bildsensor umfasst, in welchem eine Vielzahl von Bildelementen angeordnet ist und welcher dazu ausgebildet ist, eine Abfolge von Bilddaten zumindest eines Bereichs der Arbeitsumgebung aufzunehmen, wobei die Aufnahme der Bilddaten während des Arbeitsablaufs, bevorzugt kontinuierlich mit einer voreinstellbaren oder voreingestellten Bildrate, erfolgt, die Kameravorrichtung weiterhin zumindest eine Erfassungseinheit umfasst, die dazu ausgebildet ist, in den Bilddaten ein oder mehrere Objekte zu erfassen, und zumindest eine Steuereinheit umfasst, die dazu ausgebildet ist, Bildaufnahmeparameter des Bildsensors zu steuern, wobei die Erfassungseinheit dazu ausgebildet ist, auf Basis der in den Bilddaten erfassten Objekte einen interessierenden Bereich zu bestimmen, wobei die Steuereinheit dazu ausgebildet ist, zumindest einen Bildaufnahmeparameter auf der Basis des von der Erfassungseinheit bestimmten interessierenden Bereichs zu steuern, insbesondere adaptiv zu verändern, und wobei der zumindest eine Bildaufnahmeparameter einen Cropping-Parameter umfasst, welcher die Aufnahme von Bilddaten durch den Bildsensor auf einen Bildausschnitt beschränkt, der dem interessierenden Bereich entspricht.

Die Kameravorrichtung dient der Überwachung und/oder Steuerung eines Arbeitsablaufs in einer, insbesondere statischen, Arbeitsumgebung. Als Arbeitsumgebung wird in dieser Anmeldung ein dreidimensionaler Bereich bezeichnet, welcher während des Arbeitsablaufs benötigt wird. Hierbei kann der Arbeitsablauf eine Reihe von gleichartigen und/oder verschiedenen Arbeitsschritten umfassen.

Die Kameravorrichtung kann einen Bildsensor oder mehrere Bildsensoren aufweisen, die jeweils mit einer eigenen zugeordneten Steuereinheit und/oder einer eigenen zugeordneten Erfassungseinheit verbunden sind. Alternativ kann auch vorgesehen sein, dass bei einer Ausbildung der Kameravorrichtung mit mehreren Bildsensoren alle Bildsensoren einer einzigen Erfassungseinheit und einer einzigen Steuereinheit zugeordnet und mit dieser verbunden sind.

In den Bildsensoren sind eine Vielzahl von Bildelementen, häufig auch als Auflösungselemente oder Pixel bezeichnet, insbesondere matrixförmig angeordnet. Hierbei können die Bildsensoren Bildsensoren einer 3D Kamera, beispielsweise einer Lichtlaufzeit-Kamera ("Time of Flight", ToF) oder einer Stereo-Kamera oder auch Bildsensoren einer 2D Kamera, insbesondere einer 2D RGB Kamera, sein.

Die Kameravorrichtung ist stationär über, unter oder neben der Arbeitsumgebung angeordnet und zwar derart, dass der oder die Bildsensor(en) den gesamten Bereich der Arbeitsumgebung abbilden können. Die Kameravorrichtung ist dazu ausgebildet, während eines Arbeitsablaufs kontinuierlich mit einer voreingestellten oder voreinstellbaren Bildrate eine Abfolge von Bilddaten zumindest eines Bereichs der Arbeitsumgebung aufzunehmen. Um eine vollständige zeitliche Überwachung des Arbeitsablaufs zu erhalten, ist es hierbei zweckmäßig, die Voreinstellung der Bildrate derart vorzunehmen, dass sie größer ist als die Taktrate der Arbeitsschritte des Arbeitsablaufs.

Die Erfassungseinheit ist dazu ausgebildet, insbesondere mittels eines Neuronalen Netzes, in den Bilddaten Objekte zu erfassen, und auf Basis der in den Bilddaten erfassten Objekte einen interessierenden Bereich, auch "region of interest" (ROI) genannt, innerhalb der Arbeitsumgebung zu bestimmen. Hierzu kann die Erfassungseinheit beispielsweise dazu ausgebildet sein, eine äußere begrenzende Kontur der in den Bilddaten erfassten Objekte zu bestimmen und diese Kontur zum Bestimmen des interessierenden Bereichs heranzuziehen.

Der interessierende Bereich ist im Rahmen der Anmeldung als derjenige Bildausschnitt in den Bilddaten definiert, welcher alle vor dem nächsten Arbeitsschritt in der Arbeitsumgebung erfassten relevanten Objekte und einen hinreichend großen anschließenden Randbereich umfasst. Bei einer Palettierung handelt es sich bei dem interessierenden Bereich somit aus dem Blickwinkel des Bildsensors um die gesamte Fläche der Palette, der Ladung auf der Palette, sowie einer hinreichend großen Puffer-Umgebung, um sicherzustellen, dass die Ladung immer im relevanten Bildausschnitt ist.

Die Größe eines interessierenden Bereichs kann sich während des Arbeitsablaufs, insbesondere kontinuierlich, ändern. So ist beispielsweise zu Beginn eines Palettierungsvorgangs der Abstand zwischen Kamera und der der bereits auf die Palette positionierten Ladung relativ groß, wodurch sich ein relativ kleiner interessierender Bereich ergibt. Mit Fortschreiten des Palettierungsvorgangs wird der Abstand zwischen Kamera und der der bereits auf die Palette positionierten Ladung fortwährend kleiner, was zu einem größer werdenden interessierenden Bereich führt.

Die Kameravorrichtung ist nun dazu ausgebildet, über ihre eigenen aufgenommenen Bilddaten fortwährend den interessierenden Bereich und zumindest einen Bildaufnahmeparameter adaptiv zu verändern, um für die sich verändernden Aufnahmeanforderungen optimale Bildaufnahmeparameter bereitstellen zu können.

Hierbei wird zumindest der Cropping-Parameter der Bildaufnahme verändert und die Bildaufnahme somit auf einen Bildausschnitt beschränkt, der dem sich verändernden interessierenden Bereich entspricht. So können beispielsweise Neuronale Netze oder geeignete Algorithmen genutzt werden, um die Bildkontur einer Palette samt Inhalt zu erkennen und zu bestimmen. Anhand der erkannten Kontur wird ein interessierender Bereich bestimmt, wodurch ein relevanter Bildausschnitt definiert wird, in dem die Palette sicher erfasst ist. Die Ausmaße und Grenzen dieser Kontur werden daraufhin als Cropping-Parameter gespeichert, wodurch die Aufnahme auf einen relevanten Bildausschnitt eingeschränkt ist, der dem interessierenden Bereich entspricht.

Die Kameravorrichtung ist dazu ausgebildet, die Aufnahmeparameter derart adaptiv zu verändern, dass während eines Arbeitsablaufs immer nur ein jeweiliger interessierender Bereich aufgenommen wird. Die Aufnahme von Bilddaten ist somit adaptiv auf relevante Bildausschnitte beschränkt, während eine Aufnahme von unnötigen Bilddaten vermieden wird. Dies reduziert das Volumen der zu übertragenden und auszuwertenden Bilddaten, verringert die Latenzzeit und ermöglicht kostensparende Lösungen in der Datenübertragungsarchitektur. Gleichzeitig sind die übertragenen Bilddaten von hoher Qualität, da nur hochwertige und relevante Bilddaten erzeugt werden.

Die Kameravorrichtung kann neben der Überwachung von Palettierungsabläufen auch zur Überwachung anderer Arbeitsabläufe eingesetzt werden. Zu nennen sind hier beispielsweise das Bin Picking mit unterschiedlichen Füllständen, die Überwachung unterschiedlich hoch beladener Förderbänder inklusive der Segmentierung oder Klassifizierung der auf dem Förderband befindlichen Ladung, die Überwachung von Montagepositionen mittels eines auf einem Roboterarm angeordneten Sensors mit dem Ziel, ein spezifisches Objekt in dem interessierenden Bereich zu halten, um Veränderungen bei dem Objekt zu erkennen, oder auch ein detailliertes Tracking von Objekten, wobei der interessierende Bereich dem Objekt folgt, um die Bewegung mitzuführen.

Gemäß einer Ausführungsform der Erfindung ist die Steuereinheit dazu ausgebildet, den zumindest einen Bildaufnahmeparameter für die nächste Aufnahme von Bilddaten auf Basis des von der Erfassungseinheit in den Bilddaten der vorherigen Aufnahme bestimmten interessierenden Bereichs zu bestimmen, insbesondere adaptiv zu verändern. Die Kameravorrichtung ist somit dazu ausgebildet, Bilddaten zu erzeugen und an die Erfassungseinheit zu übermitteln, welche den aktuellen Fortschritt des Arbeitsprozesses zeigen. Die Erfassungseinheit bestimmt in diesen aktuellen Bilddaten einen interessierenden Bereich, welcher alle vor dem nächsten Arbeitsschritt in der Arbeitsumgebung erfassten relevanten Objekte und einen hinreichend großen anschließenden Randbereich umfasst. Basierend auf diesem aktuellen interessierenden Bereich werden nun durch die Steuereinheit Bildaufnahmeparameter für die nächste Aufnahme bestimmt. Die Bildaufnahmeparameter sind somit optimal auf die aktuelle Situation und den aktuellen interessierenden Bereich eingestellt bzw. abgestimmt.

Gemäß einer Ausführungsform der Erfindung ist die Auflösung der Bilddaten konstant und ist zwischen einem Minimalwert und einem Maximalwert auswählbar und/oder voreinstellbar. Zur Auswahl der Auflösung kann beispielsweise ein Interface an der Kameravorrichtung vorgesehen sein, über welches die gewünschte Auflösung eingegeben werden kann. Um die gewünschte Auflösung bereitzustellen, ist die Kameravorrichtung insbesondere dazu ausgebildet, geeignete Algorithmen, beispielsweise Interpolation, auf die Bilddaten anzuwenden. Hierbei wird die Interpolation vorzugsweise auf Bilddaten mit einer höheren Auflösung als der gewünschten angewendet, wodurch ein nachgelagertes "Downsampling" der Bilddaten erfolgt.

Die Auflösung kann beispielsweise der Auflösung der Bilddaten entsprechen, mit welchen ein Neuronales Netz für die nachfolgende Segmentierung der Bilddaten trainiert wurde. Algorithmen und insbesondere Neuronale Netze arbeiten am besten auf Eingabebildern mit fester, bekannter Auflösung. Durch die Auswahl einer konstanten Auflösung, die der Auflösung der Trainingsdaten entspricht, kann die Genauigkeit der von dem Neuronalen Netz berechneten Lösung verbessert und optimiert werden.

Gemäß einer Ausführungsform der Erfindung umfassen die Bildaufnahmeparameter einen Binning-Parameter, welcher eine Anzahl benachbarter Bildelemente des Bildsensors zusammenfasst. Ist beispielsweise die Auflösung der Bilddaten in einer Dimension um mehr als einen ganzzahligen Faktor F (2x, 4x, ...) zu groß, so wird der Binning-Parameter derart gewählt, dass eine dem Faktor F entsprechende Anzahl benachbarter Pixel zusammengefasst wird. Nach dem Zusammenfassen der Bildelemente können die Bilddaten auf die gewünschte Auflösung interpoliert werden. Das Zusammenfassen der Bildelemente kann vor der Aufnahme von Bilddaten oder um Anschluss an die Aufnahme von Bilddaten erfolgen, wobei Bildelemente der aufgenommenen Bilddaten entsprechend zusammengefasst werden.

Mit dem Binning der Bilddaten kann nach der Auswahl und/oder dem Setzen der konstanten Auflösung erreicht werden, dass unabhängig von der Größe des interessierenden Bereichs Bilddaten mit einer festen Bildgröße aufgenommen und der weiteren Verarbeitung zugeführt werden können. Die Kameravorrichtung ist folglich in der Lage, immer gleich große Bilddaten mit einem bestmöglichen Informationsgehalt über den interessierenden Beriech auszugeben. Somit liefert die Kameravorrichtung immer ein optimales Bild als Eingangsdaten für die Segmentierung, beispielsweise für das Neuronale Netz. Ein Neuronales Netz arbeitet am besten mit einer feste Eingangsgröße, welche auch während des Trainingsprozesses des Neuronalen Netztes benutzt wurde. Durch ihre gleiche Bildgröße können die aufgenommen Bilddaten direkt in das Neuronale Netz injiziert werden, ohne eine weitere Anpassung der Bildgröße oder ein Auffüllen nicht vorhandener Daten vorzunehmen. Durch das Setzen einer fester Bildgröße können zudem genauere Angaben zur benötigen Bandbreite gemacht werden und auch bessere Abschätzungen zur Durchlaufzeit bei dem eigentlichen Arbeitsschritt getroffen werden. Somit kann eine optimale Abwägung zwischen der Anzahl an Datenpunkten in den Bilddaten und einer maximal möglichen Bandbreite erreicht werden.

Gemäß einer Ausführungsform der Erfindung umfassen die Bildaufnahmeparameter einen räumlichen Filterparameter, welcher die durch den Bildsensor aufgenommenen Bilddaten räumlich mittelt. Durch die adaptive Veränderung der Bildaufnahmeparameter ist es möglich, den räumlichen Filterparameter, beispielsweise anhand der zuletzt aufgenommenen Bilddaten, optimal zu konfigurieren. Der räumlichen Filterparameter kann derart gewählt werden, dass ein bestmögliches Maß zwischen räumlicher Wiederholgenauigkeit und Kanten-Auflösung erhalten wird. Bei hohen Anforderungen an die Wiederholgenauigkeit, beispielsweise eine Wiederholgenauigkeit besser 5mm, kann es notwendig sein, für große Abstände zwischen Kamera und Objekt stärker räumlich zu filtern. Dazu können beispielsweise Messwerte benachbarter Bildelemente gewichtet gemittelt werden. Für helle Objekte oder nahe Abstände kann auf eine derartige Mittelung gegebenenfalls verzichtet werden. Ähnlich verhält es sich für die Aktivierung bzw. Deaktivierung von Funktionen wie HDR (High Dynamic Range) der Kameravorrichtung mit Hilfe mehrerer Aufnahmen.

Gemäß einer Ausführungsform der Erfindung umfassen die Bildaufnahmeparameter einen zeitlichen Filterparameter, welcher eine Abfolge von hintereinander von dem Bildsensor aufgenommene Bilddaten zeitlich mittelt. Durch die adaptive Veränderung der Bildaufnahmeparameter ist es möglich, den zeitlichen Filterparameter, beispielsweise anhand der zuletzt aufgenommenen Bilddaten, optimal zu konfigurieren. Ähnlich wir der räumlichen Filterparameter kann der zeitliche Filterparameter derart gewählt werden, dass ein bestmögliches Maß zwischen Wiederholgenauigkeit und Kanten-Auflösung zu erhalten wird.

Gemäß einer Ausführungsform der Erfindung umfassen die Bildaufnahmeparameter die Belichtungszeit für die Aufnahme der Bilddaten durch den Bildsensor. Durch die adaptive Veränderung der Bildaufnahmeparameter ist es möglich, die Belichtungszeit, beispielsweise anhand der zuletzt aufgenommenen Bilddaten, optimal zu konfigurieren. Die Belichtungszeit kann sich beispielsweise in Anhängigkeit der Entfernung zwischen der Kameravorrichtung und dem aufgenommenen Objekt ändern. Auch Umgebungseinflüsse wie eine sich verändernde Umgebungshelligkeit können eine Anpassung der Belichtungszeit notwendig machen.

Gemäß einer Ausführungsform der Erfindung umfasst die Erfassungseinheit ein Neuronales Netz, welches dazu ausgebildet ist, auf Basis der in den Bilddaten erfassten Objekte einen interessierenden Bereich zu bestimmen. Das Neuronale Netz kann beispielsweise dazu ausgebildet sein, eine äußere begrenzende Kontur der in den Bilddaten erfassten Objekte zu bestimmen und den interessierenden Bereich basierend auf dieser Kontur auszuwählen. Bei dem Neuronalen Netz kann es sich beispielsweise um ein Objektdetektionsnetz oder ein Segmentierungsnetz wie R-CNN, Mask R-CNN, YOLO, SSD oder Vision Transformer handeln, welches mit Beispielbildern oder simulierten Daten der erfassten Objekte trainiert wurde.

Gemäß einem zweiten Aspekt der Erfindung wird die Aufgabe durch ein Verfahren zum Überwachen und/oder Steuern eines Arbeitsablaufs in einer Arbeitsumgebung durch eine Kameravorrichtung gelöst, wobei die Kameravorrichtung zumindest einen Bildsensor, zumindest eine Erfassungseinheit und zumindest eine Steuereinheit umfasst, die dazu ausgebildet ist, Bildaufnahmeparameter des Bildsensors zu steuern, wobei in dem Bildsensor eine Vielzahl von Bildelementen angeordnet ist und der Bildsensor eine Abfolge von Bilddaten zumindest eines Bereichs der Arbeitsumgebung, bevorzugt kontinuierlich mit einer voreinstellbaren oder voreingestellten Bildrate, aufnimmt, die Erfassungseinheit in den Bilddaten Objekte erfasst und auf Basis der in den Bilddaten erfassten Objekte einen interessierenden Bereich innerhalb der Arbeitsumgebung bestimmt, die Steuereinheit zumindest einen Bildaufnahmeparameter auf der Basis des von der Erfassungseinheit bestimmten interessierenden Bereichs steuert, insbesondere adaptiv verändert, und wobei der zumindest eine Bildaufnahmeparameter einen Cropping-Parameter umfasst, welcher die Aufnahme von Bilddaten durch den Bildsensor auf einen Bildausschnitt beschränkt, der dem interessierenden Bereich entspricht.

Gemäß einer Ausführungsform des zweiten Aspekts der Erfindung bestimmt, insbesondere verändert adaptiv, die Steuereinheit Bildaufnahmeparameter für die nächste Aufnahme von Bilddaten auf Basis des von der Erfassungseinheit in den Bilddaten der vorherigen Aufnahme bestimmten interessierenden Bereichs.

Insbesondere nimmt der Bildsensor zu Beginn des Verfahrens den gesamten Bereich der Arbeitsumgebung mit einer maximalen Auflösung auf und speichert die Aufnahme als Referenzbild. Die maximale Auflösung entspricht der bestmöglichen Auflösung des Bildsensors der Kameravorrichtung. Das Referenzbild entspricht einem vollständigen und genauen Abbild der Arbeitsumgebung und bietet einen vollständigen Überblick über den zu Verfügung stehenden Raum und der darin befindlichen Vorrichtungen. Durch das Referenzbild wird sichergestellt, dass sich kein relevanter Bildausschnitt außerhalb des aufgenommenen Bereichs befindet. Das Referenzbild dient der Überprüfung und Definition der Arbeitsumgebung zu Beginn des Arbeitsablaufs. Das Referenzbild kann darüber hinaus auch zu Sicherheitszwecken genutzt werden

Das erfindungsgemäße Verfahren und seine Ausführungsformen werden mittels der erfindungsgemäßen Kameravorrichtung oder einer ihrer Ausführungsformen ausgeführt. Die Ausführungen zu der Kameravorrichtung und ihrer Ausführungsformen gelten entsprechend.

Gemäß dem Verfahren werden die Aufnahmeparameter derart adaptiv verändert, dass während eines Arbeitsablaufs immer nur ein jeweiliger interessierender Bereich aufgenommen wird. Die Aufnahme von Bilddaten ist somit adaptiv auf relevante Bildausschnitte beschränkt, während eine Aufnahme von unnötigen Bilddaten vermieden wird. Dies reduziert das Volumen der zu übertragenden und auszuwertenden Bilddaten, verringert die Latenzzeit und ermöglicht kostensparende Lösungen in der Datenübertragungsarchitektur. Gleichzeitig sind die übertragenen Bilddaten von hoher Qualität, da nur hochwertige und relevante Bilddaten erzeugt werden. Der interessierende Bereich wird insbesondere in aktuellen, den Arbeitsfortschritt zeigenden Bilddaten bestimmt. Basierend auf diesem aktuellen interessierenden Bereich werden nun durch die Steuereinheit Bildaufnahmeparameter für die nächste Aufnahme bestimmt. Die Bildaufnahmeparameter werden insbesondere auf Basis dieses aktuellen interessierenden Bereichs adaptiv bestimmt und sind somit optimal auf die aktuelle Situation und den aktuellen interessierenden Bereich eingestellt bzw. abgestimmt.

Gemäß einem dritten Aspekt der Erfindung wird die Aufgabe durch ein System zum Überwachen und/oder Steuern eines Arbeitsablaufs in einer Arbeitsumgebung gelöst, umfassend eine Kameravorrichtung der oben erläuterten Art, eine Arbeitsvorrichtung, insbesondere Roboter, die dazu ausgebildet ist, Schritte des Arbeitsablaufs durchzuführen und eine Steuervorrichtung, die dazu ausgebildet ist, basierend auf den von der Kameravorrichtung erzeugten Bilddaten Steuerparameter für die Arbeitsvorrichtung zu berechnen und an die Arbeitsvorrichtung zu übermitteln. Die Steuervorrichtung kann ein integraler Bestandteil der Kameravorrichtung sein oder separat von der Kameravorrichtung angeordnet sein. Die Steuerparameter können beispielsweise Koordinaten von Objekten in der Arbeitsumgebung umfassen.

Gemäß einer Ausführungsform des dritten Aspekts der Erfindung ist die Steuervorrichtung dazu ausgebildet, die Steuerparameter aus den von der Kameravorrichtung erzeugten Bilddaten mittels eines Neuronalen Netzes zu berechnen. Dies ermöglicht eine schnelle und präzise Berechnung der Steuerparameter aus den Bilddaten, was den Arbeitsablauf beschleunigt und dessen Qualität verbessert.

Ein vierter Aspekt der Erfindung umfasst ein Verfahren zur optimierten Vorhersage von Bildaufnahmeparametern der Kameravorrichtung der oben erläuterten Art, wobei ein computergeneriertes virtuelles Modell der Arbeitsumgebung und des Arbeitsablaufs erzeugt wird, ein virtuelles Abbild der Abfolge von Bilddaten erzeugt wird, die Erfassungseinheit in dem virtuellen Abbild der Abfolge von Bilddaten Objekte erfasst und auf Basis der in den Bilddaten erfassten Objekte jeweils einen interessierenden Bereich innerhalb der virtuellen Arbeitsumgebung bestimmt, die Steuereinheit auf Basis der jeweils von der Erfassungseinheit bestimmten interessierenden Bereiche eine Abfolge von Bildaufnahmeparametern bestimmt und die Abfolge von Bildaufnahmeparametern gespeichert und/oder an eine Speichereinheit übermittelt wird, insbesondere wobei die Abfolge von Bildaufnahmeparametern eine Abfolge von Cropping-Parametern, welcher die Aufnahme von Bilddaten durch den Bildsensor auf einen Bildausschnitt beschränkt, der dem interessierenden Bereich entspricht.

Mittels einer Virtualisierung wird somit ein digitaler Zwilling geschaffen, der verwendet wird, bestmögliche Parameter vorherzusagen. Am Bespiel des Palettierungsvorgangs kann eine Virtualisierung der Arbeitsumgebung, der Palette und der Sensordaten verwendet werden, um beim Aufbau oder Abbau der Palette vorherzusagen, welche Einstellungen der Bildaufnahmeparameter ein bestmögliches Ergebnis liefern werden. Dies kann beispielsweise geometrisch auf Basis der virtualisierten Arbeitsumgebung oder anhand einer Sensordatensimulation erfolgen. Insbesondere können die simulierten Sensordaten demselben Neuronalen Netz zugeführt werden, das zur Bestimmung des interessierenden Bereichs genutzt wird, um die Bildaufnahmeparameter zu verbessern.

Die Erfindung wird nachfolgend lediglich beispielhaft anhand der Figuren erläutert.
- Fig. 1: zeigt eine Ausführungsform des erfindungsgemäßen Systems in einer schematischen Darstellung zu einem ersten Zeitpunkt eines Arbeitsablaufs,
- Fig. 2: zeigt das System der Fig. 1 zu einem zweiten Zeitpunkt des Arbeitsablaufs,
- Fig. 3: zeigt ein Flussdiagramm einer Ausführungsform des erfindungsgemäßen Verfahrens mittels des Systems der Fig. 1 und 2.

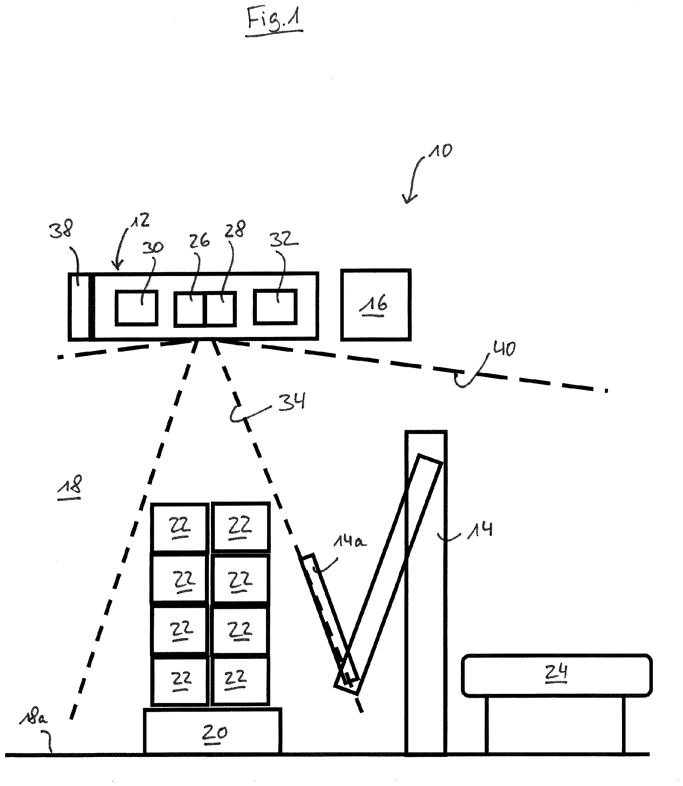

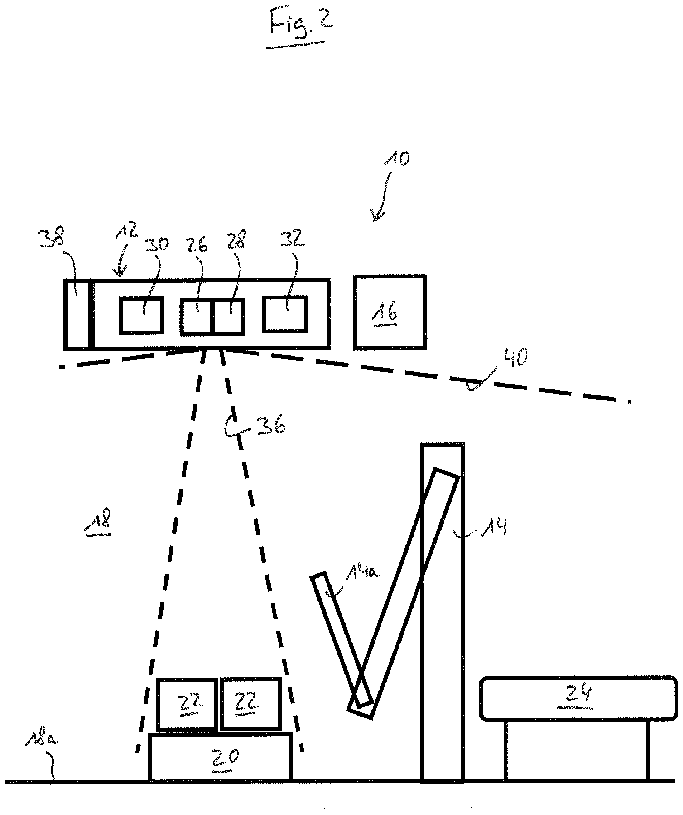

Fig. 1 und 2 zeigen eine Ausführungsform eines erfindungsgemäßen Systems 10 Systems in schematischen Darstellungen zu einem ersten und zweiten Zeitpunkt eines Arbeitsablaufs. Das System 10 umfasst eine Kameravorrichtung 12, eine Arbeitsvorrichtung 14, hier schematisch als Roboter dargestellt, und eine Steuervorrichtung 16. Das System 10 befindet sich in einer Halle 18, welche eine Arbeitsumgebung bildet. Auf dem Boden 18a der Halle 18 befindet sich eine mit Warenpaketen 22 beladene Palette 20, welche entladen werden soll. Die Warenpakete 22 werden hierzu von einem Arm 14a des Roboters 14 von der Palette 20 gehoben und auf einem Förderband 24 positioniert. Zu dem in der Fig. 1 gezeigten frühen ersten Zeitpunkt des Arbeitsablaufs befinden sich noch viele Warenpakete 22 auf der Palette 20. Zu dem in der Fig. 2 gezeigten späteren zweiten Zeitpunkt des Arbeitsablaufs wurden von dem Roboterarm 14a bereits weitere Warenpakete 22 von der Palette 20 gehoben und auf dem Förderband 24 positioniert.

Die Kameravorrichtung 12 ist über der Palette 20, beispielsweise an der Decke der Halle 18 in einer Höhe von 4m, angeordnet.

Die Kameravorrichtung 12 beinhaltet einen ersten Bildsensor 26 und einen zweiten Bildsensor 28, welche nebeneinander angeordnet sind und im Wesentlichen das gleiche Blickfeld haben. In dem ersten Bildsensor 26 und in dem zweiten Bildsensor 28 sind jeweils eine Vielzahl von Bildelementen angeordnet. Der erste Bildsensor 26 ist dazu ausgebildet, ein dreidimensionales Abbild der Arbeitsumgebung 18 zu erzeugen, und kann beispielsweise eine 3D Lichtlaufzeit-Kameras oder 3D Stereo Kamera sein. Der zweite Bildsensor 26 ist dazu ausgebildet, ein zweidimensionales Abbild der Arbeitsumgebung 18 zu erzeugen. Bei dem zweiten Lichtsensor 28 kann es sich beispielsweise um eine 2D RGB-Kamera handeln. Die Kameravorrichtung 12 ist dazu ausgebildet, mittels des ersten Bildsensors 26 und/oder des zweiten Bildsensors 28 eine kontinuierliche Abfolge von Bilddaten zumindest eines Bereichs der Arbeitsumgebung 18 aufzunehmen. Für eine vollständige zeitliche Überwachung des Arbeitsablaufs ist hierbei die Bildrate derart gewählt, dass sie größer ist als die Taktrate der Arbeitsschritte des Arbeitsablaufs, d.h. des Greifens der Warenpakete 22 auf der Palette 20.

Die Kameravorrichtung 12 beinhaltet weiterhin eine Erfassungseinheit 30 und eine Steuereinheit 32. Die Erfassungseinheit 30 ist dazu ausgebildet ist, in den Bilddaten des ersten und/oder zweiten Bildsensors 26, 28 ein oder mehrere Objekte zu erfassen und auf Basis der in den Bilddaten erfassten Objekte einen interessierenden Bereich 34, 36 zu bestimmen. Hierzu kann die Erfassungseinheit 30 ein Neuronales Netz beinhalten, welches beispielsweise eine äußere begrenzende Kontur der in den Bilddaten erfassten Objekte bestimmt und diese Kontur zum Bestimmen des jeweiligen interessierenden Bereichs 34, 36 heranzieht. Zur Bestimmung des interessierenden Bereichs kann die Erfassungseinheit die Bilddaten der Bildsensoren 26, 28 separat behandeln oder auch miteinander kombinieren, um zu einer genaueren Bestimmung zu gelangen.

Der interessierende Bereich 34, 36 ist dabei derjenige Bildausschnitt in den Bilddaten, welcher alle vor dem nächsten Arbeitsschritt in der Arbeitsumgebung 18 erfassten relevanten Objekte und einen hinreichend großen anschließenden Randbereich umfasst. Bei dem gezeigten Beispiel der Depalettierung handelt es sich bei dem interessierenden Bereich 24 somit aus dem Blickwinkel des ersten und/oder zweiten Bildsensors 26, 28 um die gesamte Fläche der Palette 20, der Warenpakete 22 auf der Palette 20, sowie einer hinreichend großen Puffer-Umgebung, um sicherzustellen, dass alle auf der Palette 20 befindlichen Warenpakete 22, d.h. die aktuelle Ladung der Palette 20, zu jeder Zeit im relevanten Bildausschnitt ist. Während des Arbeitsvorgangs ändert sich der interessierende Bereich 34, 36 fortwährend. Insbesondere ist durch die kleinere Entfernung der auf der Palette 20 befindliche Warenpakte 22 zu der Kameravorrichtung 12 der interessierende Bereich 34 zu dem frühen ersten Zeitpunkt der Palettierung größer als der interessierende Bereich 36 zu dem späteren zweiten Zeitpunkt der Depalettierung.

Die Steuereinheit 32 ist dazu ausgebildet, Bildaufnahmeparameter auf der Basis des von der Erfassungseinheit 30 bestimmten interessierenden Bereichs 34, 36 zu steuern und adaptiv zu verändern. Die Bildaufnahmeparameter beinhalten einen Cropping-Parameter, welcher die Aufnahme von Bilddaten durch den Bildsensor 26, 28 auf einen Bildausschnitt beschränkt, der dem jeweiligen interessierenden Bereich 34, 36 entspricht. Die Bildaufnahmeparameter beinhalten weiterhin einen Binning-Parameter, welcher eine Anzahl benachbarter Bildelemente des ersten und/oder zweiten Bildsensors 26, 28 zusammenfasst, die jeweilige Belichtungszeit des ersten und/oder zweiten Bildsensors 26, 28, einen räumlichen Filter, welcher die durch den ersten und/oder zweiten Bildsensor 26, 28 aufgenommenen Bilddaten räumlich mittelt und einen zeitlichen Filter, welcher eine Abfolge von hintereinander von dem ersten und/oder zweiten Bildsensor 26, 28 aufgenommene Bilddaten zeitlich mittelt.

Die Kameravorrichtung 12 beinhaltet weiterhin ein Interface 38, mittels dessen eine gewünschte Auflösung der aufzunehmenden Bilddaten ausgewählt und/oder eingegeben und an die Steuereinheit 32 übermittelt werden kann.

Die Steuervorrichtung 16 ist hier als separates Bauteil dargestellt, kann jedoch auch ein integraler Bestandteil der Kameravorrichtung 12 sein. Die Steuervorrichtung 16 ist dazu ausgebildet, basierend auf den von der Kameravorrichtung 12 erzeugten Bilddaten Steuerparameter für den Roboter 14 zu berechnen und an den Roboter 14 zu übermitteln. Die Steuerparameter umfassen beispielsweise optimale Greifkoordinaten zum Greifen eines der Warenpakete 22 auf der Palette 20. Die Steuervorrichtung 16 verfügt hierzu über ein Neuronales Netz, welches Aufgaben wie die Segmentierung, die Klassifizierung, oder die Bestimmung dreidimensionaler Koordinaten übernimmt. Die berechneten Steuerparameter können kabelgebunden oder drahtlos an den Host des Roboters 14 übertragen werden.

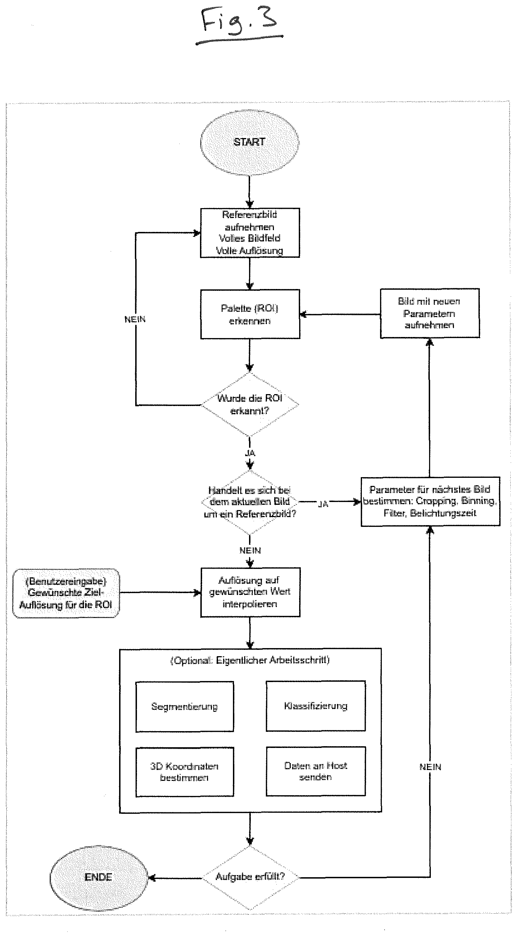

Eine Ausführungsform des Verfahrens zum Überwachen und Steuern eines Palettierungsvorgangs mittels des Systems 10 der Fig. 1 und 2 wird nun anhand des Flussdiagrams der Fig. 3 erläutert.

Zu Beginn des Arbeitsablaufs wird von einem Nutzer die gewünschte Auflösung der aufzunehmenden Bilddaten über das Interface 38 der Kameravorrichtung 12 eingegeben. Daraufhin nehmen der erste und der zweite Bildsensor 26, 28 jeweils den gesamten Bereich 40 der Arbeitsumgebung 18 mit einer maximalen Auflösung auf und speichern die Aufnahmen jeweils als Referenzbild. Die maximale Auflösung entspricht jeweils der bestmöglichen Auflösung der Bildsensoren 26, 28 der Kameravorrichtung 12. Das Referenzbild entspricht einem vollständigen und genauen Abbild der Arbeitsumgebung 18 und bietet einen vollständigen Überblick über den zu Verfügung stehenden Raum und der darin befindlichen Vorrichtungen 14, 20, 22, 24. Durch das Referenzbild wird sichergestellt, dass sich kein relevanter Bildausschnitt außerhalb des aufgenommenen Bereichs befindet. Das Referenzbild dient der Überprüfung und Definition der Arbeitsumgebung 18 zu Beginn des Arbeitsablaufs.

Durch das Neuronale Netz der Erfassungseinheit 30 werden nun in dem Referenzbild Objekte erfasst und auf Basis der in den Bilddaten erfassten Objekte ein interessierender Bereich (ROI) innerhalb der Arbeitsumgebung 18 bestimmt. Konnte kein interessierender Bereich bestimmt werden, so werden die Schritte der Aufnahme des Referenzbildes und der Bestimmung der ROI widerholt, bis eine ROI bestimmt werden konnte. Basierend auf dem bestimmten interessierenden Bereich werden nun von der Steuereinheit 32 Bildaufnahmeparameter bestimmt. Die Bildaufnahmeparameter beinhalten den Cropping-Parameter, den Binning-Parameter, die Belichtungszeit und den räumlichen und zeitlichen Filter.

Nachdem die Steuereinheit 32 die Bildaufnahmeparameter adaptiv an den interessierenden Bereich angepasst hat, werden von den Bildsensoren 26, 28 neue Bilddaten aufgenommen, die an den aktuellen interessierenden Bereich angepasst sind. Diese neuen Bilddaten sind die ersten Bilddaten, die während des Arbeitsablaufs von der Steuervorrichtung 16 genutzt werden, um Steuerparameter für den Roboter 14 zu ermitteln. Für eine optimale Arbeitsweise des Neuronalen Netztes der Steuervorrichtung 16 werden die Bilddaten zunächst jedoch auf die vom Nutzer eingegeben gewünschte Auflösung interpoliert. Dabei entspricht die gewünschte Auflösung idealerweise der Auflösung der Bilddaten, welche zum Trainieren des Neuronalen Netzes benutzt wurden. Das Neuronale Netz analysiert die ersten Bilddaten in Hinblick auf Aufgaben wie die Segmentierung, die Klassifizierung, oder die Bestimmung dreidimensionaler Koordinaten und ermittelt hieraus Steuerparameter für den Roboter 14. Die Steuerparameter werden kabelgebunden oder drahtlos an den Host des Roboters 14 übertragen, der daraufhin den eigentlichen Arbeitsschritt durchführt und ein Warenpaket 22 von der Palette 20 entfernt.

Im nächsten Schritt werden die ersten Bilddaten dazu benutzt, einen aktuellen interessierenden Bereich zu bestimmen. Die Bildaufnahmeparameter werden adaptiv an den interessierenden Bereich angepasst und neue Bilddaten werden aufgenommen. Die neuen Bilddaten werden wieder auf die gewünschte Auflösung interpoliert und dem Neuronalen Netzwerk der Steuervorrichtung 16 zugeführt. Die auf der Basis der neuen Bilddaten ermittelten Steuerparameter werden an den Host des Roboters 14 übermittelt, welcher wieder die entsprechenden Arbeitsschritte durchführt.

Die Verfahrensschritte werden solange wiederholt, bis die Aufgabe erfüllt ist und alle Warenpakete 22 von der Palette 20 entfernt sind.

Gemäß dem erfindungsgemäßen Verfahren werden die Bildaufnahmeparameter derart adaptiv verändert, dass während eines Arbeitsablaufs immer nur ein jeweiliger interessierender Bereich 34, 36 aufgenommen wird. Die Aufnahme von Bilddaten ist somit adaptiv auf relevante Bildausschnitte 34, 36 beschränkt, während eine Aufnahme von unnötigen Bilddaten vermieden wird. Dies reduziert das Volumen der zu übertragenden und auszuwertenden Bilddaten, verringert die Latenzzeit und ermöglicht kostensparende Lösungen in der Datenübertragungsarchitektur. Gleichzeitig sind die übertragenen Bilddaten von hoher Qualität, da nur hochwertige und relevante Bilddaten erzeugt werden. Der interessierende Bereich 34, 36 wird insbesondere in aktuellen, den Arbeitsfortschritt zeigenden Bilddaten bestimmt. Basierend auf diesem aktuellen interessierenden Bereich 34, 36 werden nun durch die Steuereinheit 32 Bildaufnahmeparameter für die nächste Aufnahme bestimmt. Die Bildaufnahmeparameter werden insbesondere auf Basis dieses aktuellen interessierenden Bereichs 34, 36 adaptiv bestimmt und sind damit optimal auf die aktuelle Situation und den aktuellen interessierenden Bereich 34, 36 eingestellt bzw. abgestimmt.

Durch das erfindungsgemäße Verfahren wird somit eine schnellere, genauere und kostengünstigere Überwachung und/oder Steuerung des Arbeitsablaufs ermöglicht.

### Bezugszeichen

- 10: System
- 12: Kameravorrichtung
- 14: Roboter
- 14a: Roboterarm
- 16: Steuervorrichtung
- 18: Halle
- 18a: Boden der Halle
- 20: Palette
- 22: Warenpaket
- 24: Förderband
- 26: erster Bildsensor
- 28: zweiter Bildsensor
- 30: Erfassungseinheit
- 32: Steuereinheit
- 34: interessierender Bereich
- 36: interessierender Bereich
- 38: Interface
- 40: gesamter Bereich der Arbeitsumgebung

## Patentansprüche

1. Kameravorrichtung (12) zum Überwachen und/oder Steuern eines Arbeitsablaufs in einer Arbeitsumgebung (18), wobei die Kameravorrichtung (12) umfasst:
zumindest einen Bildsensor (26, 28), in welchem eine Vielzahl von Bildelementen angeordnet ist und welcher dazu ausgebildet ist, eine Abfolge von Bilddaten zumindest eines Bereichs der Arbeitsumgebung (18) aufzunehmen, wobei die Aufnahme der Bilddaten während des Arbeitsablaufs, bevorzugt kontinuierlich mit einer voreinstellbaren oder voreingestellten Bildrate, erfolgt,
zumindest eine Erfassungseinheit (30), die dazu ausgebildet ist, in den Bilddaten ein oder mehrere Objekte zu erfassen,
zumindest eine Steuereinheit (32), die dazu ausgebildet ist, Bildaufnahmeparameter des Bildsensors (26, 28) zu steuern,
wobei die Erfassungseinheit (30) dazu ausgebildet ist, auf Basis der in den Bilddaten erfassten Objekte (20, 22) einen interessierenden Bereich (34, 36) zu bestimmen,
wobei die Steuereinheit (32) dazu ausgebildet ist, zumindest einen Bildaufnahmeparameter auf der Basis des von der Erfassungseinheit (30) bestimmten interessierenden Bereichs (34, 36) zu steuern, insbesondere adaptiv zu verändern, und wobei der zumindest eine Bildaufnahmeparameter einen Cropping-Parameter umfasst, welcher die Aufnahme von Bilddaten durch den Bildsensor (26, 28) auf einen Bildausschnitt beschränkt, der dem interessierenden Bereich (34, 36) entspricht.

2. Kameravorrichtung nach Anspruch 1, wobei die Steuereinheit (32) dazu ausgebildet ist, den zumindest einen Bildaufnahmeparameter für die nächste Aufnahme von Bilddaten auf Basis des von der Erfassungseinheit (30) in den Bilddaten der vorherigen Aufnahme bestimmten interessierenden Bereichs (34, 36) zu bestimmen, insbesondere adaptiv zu verändern.

3. Kameravorrichtung nach Anspruch 1 oder 2, wobei die Auflösung der Bilddaten konstant ist und zwischen einem Minimalwert und einem Maximalwert auswählbar und/oder voreinstellbar ist.

4. Kameravorrichtung nach einem der Ansprüche 1 bis 3, wobei die Bildaufnahmeparameter einen Binning-Parameter umfassen, welcher eine Anzahl benachbarter Bildelemente des Bildsensors (26, 28) zusammenfasst.

5. Kameravorrichtung nach einem der Ansprüche 1 bis 4, wobei die Bildaufnahmeparameter einen räumlichen Filterparameter umfassen, welcher die durch den Bildsensor (26, 28) aufgenommenen Bilddaten räumlich mittelt.

6. Kameravorrichtung nach einem der Ansprüche 1 bis 5, wobei die Bildaufnahmeparameter einen zeitlichen Filterparameter umfassen, welcher eine Abfolge von hintereinander von dem Bildsensor (26, 28) aufgenommene Bilddaten zeitlich mittelt.

7. Kameravorrichtung nach einem der Ansprüche 1 bis 6, wobei die Bildaufnahmeparameter die Belichtungszeit für die Aufnahme der Bilddaten durch den Bildsensor (26, 28) umfassen.

8. Kameravorrichtung nach einem der Anasprüche 1 bis 7, wobei die Erfassungseinheit ein Neuronales Netz umfasst, welches dazu ausgebildet ist, auf Basis der in den Bilddaten erfassten Objekte einen interessierenden Bereich (34, 36) zu bestimmen.

9. Verfahren zum Überwachen und/oder Steuern eines Arbeitsablaufs in einer Arbeitsumgebung (40) durch eine Kameravorrichtung (12), wobei die Kameravorrichtung (12) zumindest einen Bildsensor (26, 28), zumindest eine Erfassungseinheit (30) und zumindest eine Steuereinheit (32) umfasst, die dazu ausgebildet ist, Bildaufnahmeparametern des Bildsensors (26, 28) zu steuern, wobei
in dem Bildsensor (26, 28) eine Vielzahl von Bildelementen angeordnet ist und der Bildsensor (26, 28) eine Abfolge von Bilddaten zumindest eines Bereichs der Arbeitsumgebung (18), bevorzugt kontinuierlich mit einer voreinstellbaren oder voreingestellten Bildrate, aufnimmt,
die Erfassungseinheit (30) in den Bilddaten Objekte (20, 22) erfasst und auf Basis der in den Bilddaten erfassten Objekte (20, 22) einen interessierenden Bereich (34, 36) innerhalb der Arbeitsumgebung (18) bestimmt,
die Steuereinheit (32) zumindest einen Bildaufnahmeparameter auf der Basis des von der Erfassungseinheit (32) bestimmten interessierenden Bereichs (34, 36) steuert, insbesondere adaptiv verändert, wobei der zumindest eine Bildaufnahmeparameter einen Cropping-Parameter umfasst, welcher die Aufnahme von Bilddaten durch den Bildsensor (26, 28) auf einen Bildausschnitt beschränkt, der dem interessierenden Bereich (34, 36) entspricht.

10. Verfahren nach Anspruch 9, wobei die Steuereinheit (32) Bildaufnahmeparameter für die nächste Aufnahme von Bilddaten auf Basis des von der Erfassungseinheit (30) in den Bilddaten der vorherigen Aufnahme bestimmten interessierenden Bereichs (34, 36) bestimmt, insbesondere adaptiv verändert.

11. Verfahren nach Anspruch 9 oder 10, wobei der Bildsensor (26, 28) zu Beginn des Verfahrens den gesamten Bereich (40) der Arbeitsumgebung (18) mit einer maximalen Auflösung aufnimmt und die Aufnahme als Referenzbild speichert.

12. System (10) zum Überwachen und/oder Steuern eines Arbeitsablaufs in einer Arbeitsumgebung (28), umfassend eine Kameravorrichtung (12) nach einem der Ansprüche 1 bis 8, eine Arbeitsvorrichtung (14), insbesondere Roboter, die dazu ausgebildet ist, Schritte des Arbeitsablaufs durchzuführen und eine Steuervorrichtung (16), die dazu ausgebildet ist, basierend auf den von der Kameravorrichtung (12) erzeugten Bilddaten Steuerparameter für die Arbeitsvorrichtung (14) zu berechnen und an die Arbeitsvorrichtung (14) zu übermitteln.

13. System nach Anspruch 12, wobei die Steuervorrichtung (16) dazu ausgebildet ist, die Steuerparameter aus den von der Kameravorrichtung (12) erzeugten Bilddaten mittels eines Neuronalen Netzes zu berechnen.

14. Verfahren zur optimierten Vorhersage von Bildaufnahmeparametern der Kameravorrichtung (12) nach einem der Ansprüche 1 bis 8, wobei ein computergeneriertes virtuelles Modell der Arbeitsumgebung (18) und des Arbeitsablaufs erzeugt wird,
ein virtuelles Abbild der Abfolge von Bilddaten erzeugt wird,
die Erfassungseinheit (32) in dem virtuellen Abbild der Abfolge von Bilddaten Objekte erfasst und auf Basis der in den Bilddaten erfassten Objekte jeweils einen interessierenden Bereich innerhalb der virtuellen Arbeitsumgebung bestimmt,
die Steuereinheit (32) auf Basis der jeweils von der Erfassungseinheit (30) bestimmten interessierenden Bereiche eine Abfolge von Bildaufnahmeparametern bestimmt und
die Abfolge von Bildaufnahmeparametern gespeichert und/oder an eine Rechnereinheit übermittelt wird, insbesondere wobei die Abfolge von Bildaufnahmeparametern eine Abfolge von Cropping-Parametern umfasst, welcher die Aufnahme von Bilddaten durch den Bildsensor auf einen Bildausschnitt beschränkt, der dem interessierenden Bereich entspricht.

## Geänderte Patentansprüche

### Geänderte Patentansprüche gemäss Regel 137(2) EPÜ.

1. Kameravorrichtung (12) zum Überwachen und/oder Steuern eines Arbeitsablaufs in einer Arbeitsumgebung (18), wobei die Kameravorrichtung (12) umfasst:
zumindest einen Bildsensor (26, 28), in welchem eine Vielzahl von Bildelementen angeordnet ist und welcher dazu ausgebildet ist, eine Abfolge von Bilddaten zumindest eines Bereichs der Arbeitsumgebung (18) aufzunehmen, wobei die Aufnahme der Bilddaten während des Arbeitsablaufs, bevorzugt kontinuierlich mit einer voreinstellbaren oder voreingestellten Bildrate, erfolgt,
zumindest eine Erfassungseinheit (30), die dazu ausgebildet ist, in den Bilddaten ein oder mehrere Objekte zu erfassen,
zumindest eine Steuereinheit (32), die dazu ausgebildet ist, Bildaufnahmeparameter des Bildsensors (26, 28) zu steuern,
wobei die Erfassungseinheit (30) dazu ausgebildet ist, auf Basis der in den Bilddaten erfassten Objekte (20, 22) einen interessierenden Bereich (34, 36) zu bestimmen,
wobei die Steuereinheit (32) dazu ausgebildet ist, Bildaufnahmeparameter auf der Basis des von der Erfassungseinheit (30) bestimmten interessierenden Bereichs (34, 36) zu steuern, insbesondere adaptiv zu verändern, und
wobei die Bildaufnahmeparameter einen Cropping-Parameter umfassen,
welcher die Aufnahme von Bilddaten durch den Bildsensor (26, 28) auf einen Bildausschnitt beschränkt, der dem interessierenden Bereich (34, 36) entspricht,
**dadurch gekennzeichnet, dass**
die Auflösung der Bilddaten konstant ist und zwischen einem Minimalwert und einem Maximalwert auswählbar und/oder voreinstellbar ist und die Bildaufnahmeparameter weiterhin einen Binning-Parameter umfassen, welcher eine Anzahl benachbarter Bildelemente des Bildsensors (26, 28) zusammenfasst.

2. Kameravorrichtung nach Anspruch 1, wobei die Steuereinheit (32) dazu ausgebildet ist, den zumindest einen Bildaufnahmeparameter für die nächste Aufnahme von Bilddaten auf Basis des von der Erfassungseinheit (30) in den Bilddaten der vorherigen Aufnahme bestimmten interessierenden Bereichs (34, 36) zu bestimmen, insbesondere adaptiv zu verändern.

3. Kameravorrichtung nach Anspruch 1 oder 2, wobei die Bildaufnahmeparameter einen räumlichen Filterparameter umfassen, welcher die durch den Bildsensor (26, 28) aufgenommenen Bilddaten räumlich mittelt.

4. Kameravorrichtung nach einem der Ansprüche 1 bis 3, wobei die Bildaufnahmeparameter einen zeitlichen Filterparameter umfassen, welcher eine Abfolge von hintereinander von dem Bildsensor (26, 28) aufgenommene Bilddaten zeitlich mittelt.

5. Kameravorrichtung nach einem der Ansprüche 1 bis 4, wobei die Bildaufnahmeparameter die Belichtungszeit für die Aufnahme der Bilddaten durch den Bildsensor (26, 28) umfassen.

6. Kameravorrichtung nach einem der Anasprüche 1 bis 5, wobei die Erfassungseinheit ein Neuronales Netz umfasst, welches dazu ausgebildet ist, auf Basis der in den Bilddaten erfassten Objekte einen interessierenden Bereich (34, 36) zu bestimmen.

7. Verfahren zum Überwachen und/oder Steuern eines Arbeitsablaufs in einer Arbeitsumgebung (40) durch eine Kameravorrichtung (12), wobei die Kameravorrichtung (12) zumindest einen Bildsensor (26, 28), zumindest eine Erfassungseinheit (30) und zumindest eine Steuereinheit (32) umfasst, die dazu ausgebildet ist, Bildaufnahmeparametern des Bildsensors (26, 28) zu steuern, wobei
in dem Bildsensor (26, 28) eine Vielzahl von Bildelementen angeordnet ist und der Bildsensor (26, 28) eine Abfolge von Bilddaten zumindest eines Bereichs der Arbeitsumgebung (18), bevorzugt kontinuierlich mit einer voreinstellbaren oder voreingestellten Bildrate, aufnimmt, wobei die Auflösung der Bilddaten konstant ist und zwischen einem Minimalwert und einem Maximalwert auswählbar und/oder voreinstellbar ist,
die Erfassungseinheit (30) in den Bilddaten Objekte (20, 22) erfasst und auf Basis der in den Bilddaten erfassten Objekte (20, 22) einen interessierenden Bereich (34, 36) innerhalb der Arbeitsumgebung (18) bestimmt,
die Steuereinheit (32) Bildaufnahmeparameter auf der Basis des von der Erfassungseinheit (32) bestimmten interessierenden Bereichs (34, 36) steuert, insbesondere adaptiv verändert, wobei die Bildaufnahmeparameter einen Cropping-Parameter umfassen, welcher die Aufnahme von Bilddaten durch den Bildsensor (26, 28) auf einen Bildausschnitt beschränkt, der dem interessierenden Bereich (34, 36) entspricht, und weiterhin einen Binning-Parameter umfassen, welcher eine Anzahl benachbarter Bildelemente des Bildsensors (26, 28) zusammenfasst, .

8. Verfahren nach Anspruch 7, wobei die Steuereinheit (32) Bildaufnahmeparameter für die nächste Aufnahme von Bilddaten auf Basis des von der Erfassungseinheit (30) in den Bilddaten der vorherigen Aufnahme bestimmten interessierenden Bereichs (34, 36) bestimmt, insbesondere adaptiv verändert.

9. Verfahren nach Anspruch 7 oder 8, wobei der Bildsensor (26, 28) zu Beginn des Verfahrens den gesamten Bereich (40) der Arbeitsumgebung (18) mit einer maximalen Auflösung aufnimmt und die Aufnahme als Referenzbild speichert.

10. System (10) zum Überwachen und/oder Steuern eines Arbeitsablaufs in einer Arbeitsumgebung (28), umfassend eine Kameravorrichtung (12) nach einem der Ansprüche 1 bis 6, eine Arbeitsvorrichtung (14), insbesondere Roboter, die dazu ausgebildet ist, Schritte des Arbeitsablaufs durchzuführen und eine Steuervorrichtung (16), die dazu ausgebildet ist, basierend auf den von der Kameravorrichtung (12) erzeugten Bilddaten Steuerparameter für die Arbeitsvorrichtung (14) zu berechnen und an die Arbeitsvorrichtung (14) zu übermitteln.

11. System nach Anspruch 10, wobei die Steuervorrichtung (16) dazu ausgebildet ist, die Steuerparameter aus den von der Kameravorrichtung (12) erzeugten Bilddaten mittels eines Neuronalen Netzes zu berechnen.
